# EUROPEAN PATENT APPLICATION

(11) **EP 3 629 640 A1**
(43) Date of publication of application: **01.04.2020**
(21) Application number: 18197139.1
(22) Date of filing: 27.09.2018
(51) Int. Cl.: H04W 60/06, H04W 60/00

(54) **COMMUNICATION TERMINAL, CORE NETWORK COMPONENT, METHOD FOR CONNECTING TO A MOBILE RADIO COMMUNICATION CORE NETWORK AND METHOD FOR CONTROLLING ACCESS TO A MOBILE RADIO COMMUNICATION CORE NETWORK**

(71) Applicant: NTT DOCOMO, INC., Chiyoda-ku Tokyo 100-6150 (JP)
(72) Inventor: MUTIKAINEN, Jari, 80687 München (DE); SAMA, Malla Reddy, 80687 München (DE); MINOKUCHI, Atsushi, Tokyo, 100-6150 (JP); AL-BAKRI, Ban, Tokyo, 100-6150 (JP)
(74) Representative: Viering, Jentschura & Partner mbB Patent- und Rechtsanwälte

(57) **Abstract**

According to one embodiment, a communication terminal is described comprising a communication subsystem configured to send a first connection request to a first mobile radio communication core network, upon reception of a redirection instruction from the first mobile radio communication core network to a second mobile radio communication core network, try to connect to the second mobile radio communication core network and upon unsuccessful connection to the second mobile radio communication core network, send a second connection request to the first mobile radio communication core network indicating that the communication terminal has already been redirected to the second mobile radio communication core network.

## Description

The present disclosure relates to communication terminals, core network components, methods for connecting to a mobile radio communication core network and methods for controlling access to a mobile radio communication core network.

In a scenario where two mobile radio communication core networks, such as a 5GC (Fifth Generation Core) and an EPC (Evolved Packet Core), are deployed in parallel and may both be accessed by a mobile terminal, it may be desirable for certain reasons that the mobile terminal is served by one of the two communication core networks rather than the other. One reasons for this could for example be load-balancing between the core networks. To achieve this, one of the core networks may redirect the mobile terminal to the other core network. Approaches are desirable to avoid ping-pong effects in such a scenario.

According to one embodiment, a communication terminal is provided comprising a communication subsystem configured to send a first connection request to a first mobile radio communication core network, upon reception of a redirection instruction from the first mobile radio communication core network to a second mobile radio communication core network, try to connect to the second mobile radio communication core network and, upon unsuccessful connection to the second mobile radio communication core network, send a second connection request to the first mobile radio communication core network indicating that the communication terminal has already been redirected to the second mobile radio communication core network.

According to further embodiments, a core network component, a method for connecting to a mobile radio communication core network and a method for controlling access to a mobile radio communication core network according to the above communication terminal are provided.

In the drawings, like reference characters generally refer to the same parts throughout the different views. The drawings are not necessarily to scale, emphasis instead generally being placed upon illustrating the principles of the invention. In the following description, various aspects are described with reference to the following drawings, in which:
- Figure 1: shows a communication system allowing a user device to connect to two core networks.
- Figure 2: shows a flow diagram illustrating a successful redirection from 5GC to EPC.
- Figure 3: shows a flow diagram illustrating an unsuccessful redirection from 5GC to EPC.
- Figure 4: shows a flow diagram illustrating an approach for avoiding a ping-pong effect in case of an unsuccessful redirection from 5GC to EPC.
- Figure 5: shows a communication terminal.
- Figure 6: shows a flow diagram illustrating a method for connecting to a mobile radio communication core network.
- Figure 7: shows a network component.
- Figure 8: shows a method for controlling access to a mobile radio communication core network, for example performed by a mobile radio communication core network.

The following detailed description refers to the accompanying drawings that show, by way of illustration, specific details and aspects of this disclosure in which the invention may be practiced. Other aspects may be utilized and structural, logical, and electrical changes may be made without departing from the scope of the invention. The various aspects of this disclosure are not necessarily mutually exclusive, as some aspects of this disclosure can be combined with one or more other aspects of this disclosure to form new aspects.

As 5G networks become more widely available, it is anticipated that consumers' user devices may be configured to operate on a 4G network, a 5G network, or both. Where a user devices capable of operating on both 4G and 5G, a user device connected to a radio access network may be linked to either a 4G core or a 5G core.

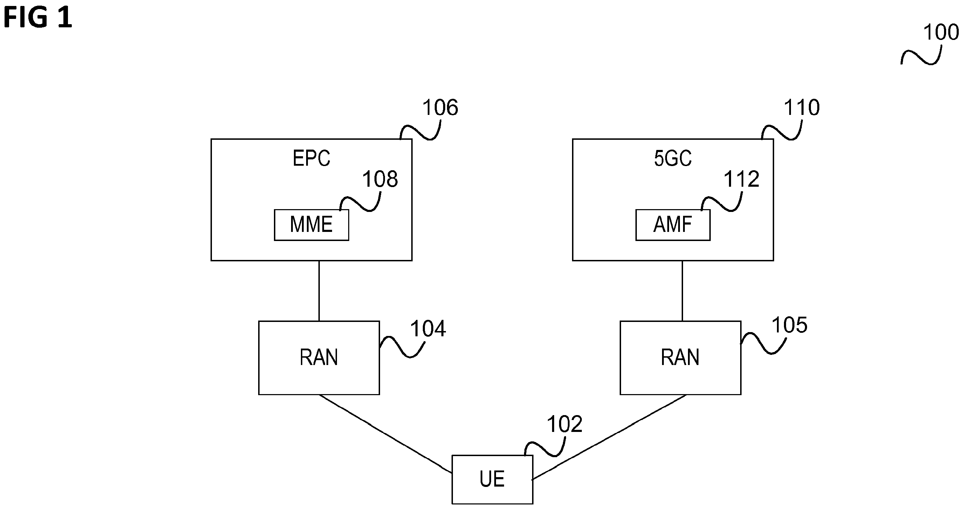

Figure 1 shows a communication system allowing a user device 102 (e.g. a user equipment UE) to connect to two core networks.

The user device 102 is connected to a first Radio Access Network 104 and a second Radio Access Network 105. The RANs 104, 105 may be any RANs including but not limited to an LTE RAN and a 5G RAN. The first RAN 104 has access to a first network 106 and the second RAN 105 has access to a second network 110. The first network may be a 4G network comprising a 4G core network, i.e. an Evolved Packet Core (EPC) 106. The second network comprises a 5G core network (5GC) 110. This means that the first RAN 104 in this example acts as LTE RAN and the second RAN 105 acts as 5G RAN. The RANs 104, 105 may also be regarded as a common RAN (providing access to both networks 106, 110) in the following.

The first core network 106 may comprise a Mobility Management Entity ("MME") 108, which may, inter alia, perform various paging and signalling control functions within the network. The second core network 110 may further comprise an access and mobility management function ("AMF") unit 112, which may include various mobility management capabilities, such as UE-based authentication, authorization, mobility management, etc. The terms "first core network" and "second core network" are provided herein for clarity and ease of reference but are by no means limited to this order.

In a scenario like the one illustrated in figure 1, where two core networks 106, 110 are deployed in parallel, it may be desirable for certain reasons that the user device 102 connects to one of the two core networks 106, 110 rather than the other. One reasons for this could for example be load-balancing between the core networks: a communication system providing multiple core networks, such as, for example, a 4G and a 5G core network, may require periodic load-balancing, to better distribute user demands across the available resources. That is, where both a 4G core network and a 5G core network are available, it should be avoided that a disproportionate number of user devices may be connected to one core compared to the other. This is achieved through load-balancing between the core networks, for example by allowing an operator of one or both of the core networks to redirect registrations from one core network 106, 110 to the other, e.g. based on load conditions.

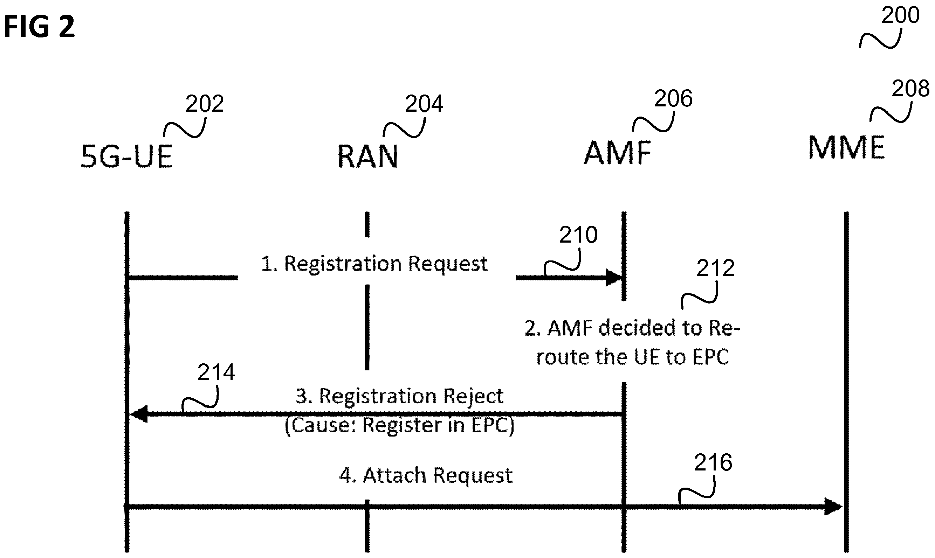

Figure 2 shows a flow diagram 200 illustrating a successful redirection from 5GC to EPC.

The redirection involves communication between a 5G enabled user device 202 (e.g. corresponding to UE 102), a RAN 204 (e.g. corresponding to both RANs 104 and 105), an AMF 206 (e.g. corresponding to AMF 112), and an MME 208 (e.g. corresponding to MME 108). According to the procedure of figure 2, the 5G enabled user device 202 sends a registration request to the AMF 206 in 210.

In 212, the AMF 206 decides to reroute the user device to the EPC. In 214, the AMF 206 sends a registration rejection to the 5G enabled user device 202, with the rejection because being the need to register in the EPC. In 216, the 5G enabled user device 202 then sends an attachment request to the MME 208.

In the example of figure 2, it is assumed that the UE 202 finds a suitable cell for connecting to the EPC. This means that the UE 202 is located in a radio cell (operated by a base station of RAN 204) which allows the UE 202 to connect to the EPC (in particular to MME 208). However, this may not be necessarily the case. A radio cell in which the UE 202 is located may for example only provide 5GC access. It may also be the case that the UE 202 is not in the coverage area of the LTE RAN 104, e.g. is only in the coverage area of one or more (allowed) Public Land Mobile Networks (PLMNs) that are connected to 5GC (e.g. only in the coverage area of 5G RAN 105).

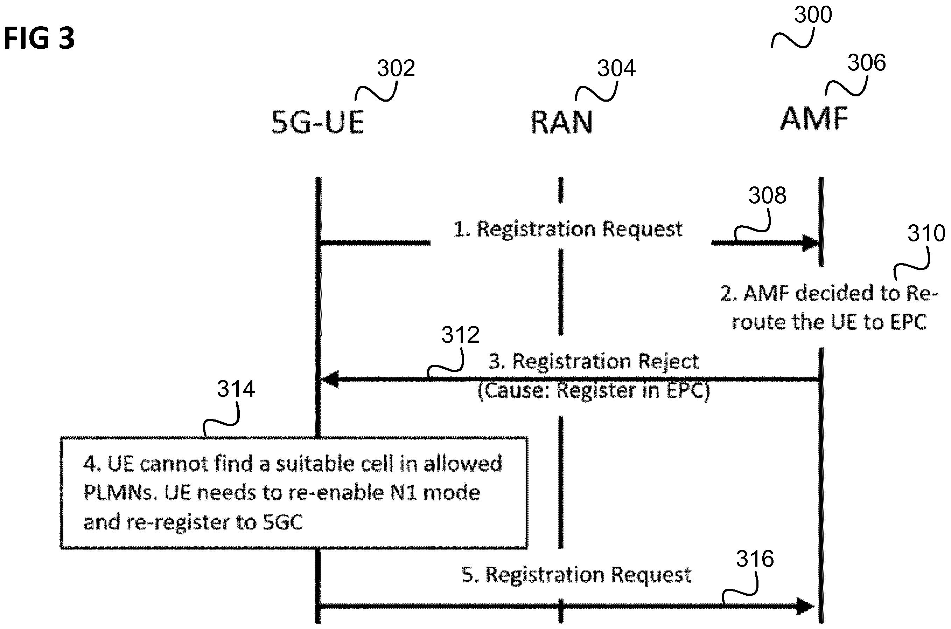

When the 5GC (i.e. AMF 206) decides to redirect the UE to EPC, the 5GC is not aware if the target CN is available or not for the UE. Accordingly, it may occur that the redirection is unsuccessful, because the UE 202 cannot connect to the EPC. This is illustrated in figure 3.

Figure 3 shows a flow diagram 300 illustrating an unsuccessful redirection from 5GC to EPC.

Similarly to figure 2, the redirection of figure 3 involves communication between a 5G enabled user device 302 (e.g. corresponding to UE 102), a RAN 304 (e.g. corresponding to both RANs 104, 105) and an AMF 306 (e.g. corresponding to AMF 112).

In 308, the 5G enabled user device 302 sends a registration request to the AMF 306.

In 310, the AMF 206 decides to reroute the user device to the EPC. In 312, the AMF 206 sends a registration rejection to the 5G enabled user device 202, with the rejection cause being the need to register in the EPC.

In 314, when the UE 302 receives the Registration Reject with a redirection indication to a target core network (EPC), the UE disables the N1 mode (i.e. the mode allowing access to a 5G core network via a 5G radio access network) and attempts to attach to EPC.

However, it is assumed in this example that the UE cannot find a suitable cell (i.e. a radio cell via which the UE may connect and which is connected to EPC, i.e. provides access to EPC). Therefore, the UE 302 re-enables the N1 mode and attempts to register back to 5GC in 316. However, this could lead to a ping-pong effect between the core networks 106, 110 since the 5GC could again redirect the UE to EPC.

In the following, approaches are described how to avoid such a ping-pong effect between the networks 106, 110. Namely, it should be avoided that EPC redirects the UE immediately back to 5GC when there is no suitable cell for EPC access and the 5GC redirects the UE again to EPC.

It should be noted that the above and the following examples are described for the direction from 5GC to EPC. However, they may also apply to the other direction from EPC to 5GC. Furthermore, they may apply to other communication technologies.

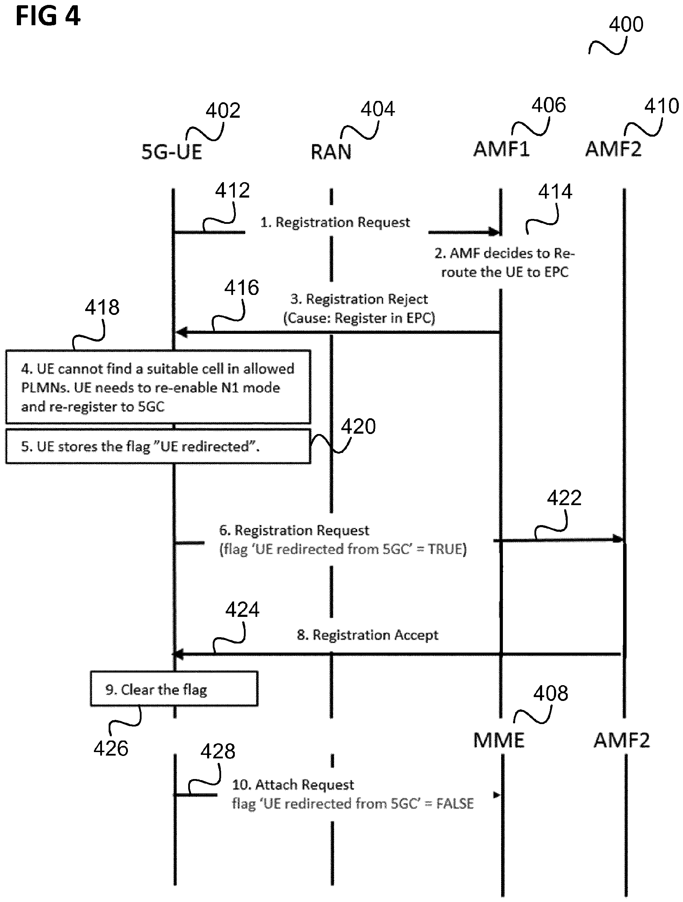

Figure 4 shows a flow diagram 400 illustrating an approach for avoiding a ping-pong effect in case of an unsuccessful redirection from 5GC to EPC.

The flow involves communication between a 5G enabled user device 402 (e.g. corresponding to UE 102), a RAN 404 (e.g. corresponding to both RANs 104, 105), a first AMF 406 and a second AMF 410 (e.g. corresponding to AMF 112, there two AMFs of 5GC 110 involved in this example however), and an MME 408 (e.g. corresponding to MME 108).

In 412, the 5G enabled user device 402 sends a registration request to the first AMF 406.

In 414, the first AMF 406 decides to reroute the user device to the EPC.

In 416, the first AMF 406 sends a registration rejection to the 5G enabled user device 402, with the rejection cause being the need to register in the EPC (in particular indicating the EPC as target core network of the redirection).

In 418, when the UE 402 receives the registration reject with a redirection indication to a target core network (EPC), the UE disables the N1 mode and attempts to attach to EPC.

However, it is assumed in this example that the UE cannot find a suitable cell (i.e. a radio cell via which the UE may connect and which is connected to EPC, i.e. provides access to EPC). Therefore, the UE 402 re-enables the N1 mode for an attempt to register back to 5GC.

In 420, the UE 402 sets (and stores) a flag indicating that it has been redirected from 5GC to EPC to 'true'.

In 422 the UE sends again a registration request to the 5GC, which is in this example to be assumed to be received by the second AMF 410 (but may also be received by the first AMF 406). The UE includes in the registration request of 422 the flag (set to 'true', i.e. to indicate that the UE 402 has been redirected from 4GC to EPC).

In 424, the second AMF 410 (or the first AMF 406 in case the registration request of 422 was received by the first AMF 406) checks the status of the flag in the registration request of 422, detects that the UE 402 was already redirected and thus is not to be redirected to the EPC again and, instead of another redirection, sends a registration accept to the UE 402, i.e. accepts the UE's registration in the 5GC.

In 426, after successful registration in the 5GC, the UE 402 clears the flag (i.e. sets it to 'false', i.e. to no longer indicate in the registration requests that the UE 402 has been redirected from 5GC to EPC). The UE may also start a counter or timer (e.g. when setting the flag to 'true') and for example only clears the flag after the counter or timer has expired (and/or it has successfully registered in the 5GC). The timer or counter value may be indicated to the UE 402 by the second AMF 410 in 424.

Later, in 428, the UE 402 may register with the EPC, e.g. due to its idle-mode camping policy. For this, the UE 402 sends an attach request to the MME 426.

The attach request may include the flag set to 'false'. In this case, the MME receives the attach request with the flag being set to 'false' and may redirect the UE back to 5GC if necessary.

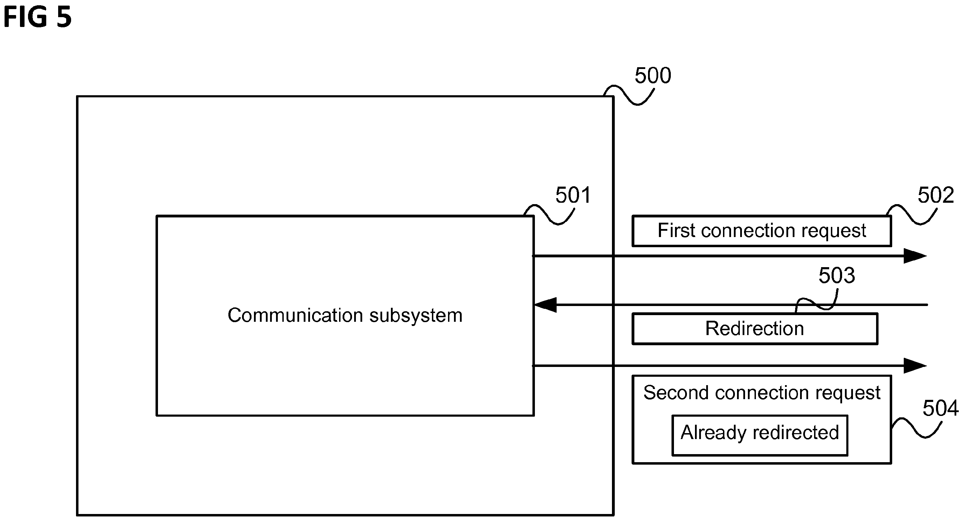

In summary, according to various embodiments, a communication terminal is provided as illustrated in figure 5.

Figure 5 shows a communication terminal 500.

The communication terminal 500 comprises a communication subsystem 501 configured to send a first connection request 502 to a first mobile radio communication core network.

The communication subsystem 501 is further configured to, upon reception of a redirection instruction 503 from the first mobile radio communication core network to a second mobile radio communication core network, try to connect to the second mobile radio communication core network.

Further, the communication subsystem 501 is configured to, upon unsuccessful connection to the second mobile radio communication core network, send a second connection request 504 to the first mobile radio communication core network indicating that the communication terminal has already been redirected to the second mobile radio communication core network.

According to various embodiments, in other words, a communication terminal (e.g. a UE) indicates to a core network that it has already been redirected by the core network to another core network, but, for example, the communication terminal was not able to connect to (e.g. register with or attach to) the other core network. A reason may for example be that the communication terminal could not find a radio cell allowing access to the other core network. The communication terminal may thus prevent to be redirected again by the core network.

The approach of figure 5 allows redirection between core networks (in the example of figure 5 from the first core network to the second core network) while avoiding a ping-pong effect (e.g. while avoiding that the communication terminal is repeatedly redirected to the second core network without being able to connect to the second core network. In particular, an operator of the core networks may perform load balancing between the core networks (without the risk of a ping-pong effect). The second connection request may comprise an indication (e.g. a flag) that the communication terminal has already been redirected (at least once) to the second mobile radio communication core network (e.g. within a predefined time period). The communication terminal may store the indication (e.g. the status of a flag) and the indication may be cleared, e.g. after a certain time period after the receipt or sending of the redirection instruction has expired.

The first core network and the second core network may for example be of different communication standards, e.g. of different mobile radio communication network generations such as 5GC and EPC (4GC).

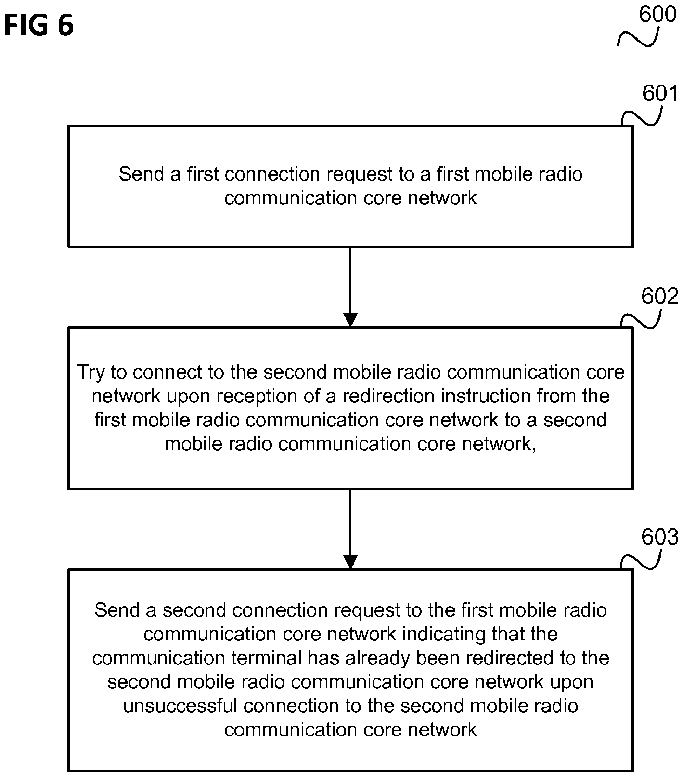

The communication terminal 500 for example carries out a method as illustrated in figure 6.

Figure 6 shows a flow diagram 600 illustrating a method for connecting to a mobile radio communication core network, for example performed by a communication terminal.

In 601, the communication terminal sends a first connection request to a first mobile radio communication core network.

In 602, upon reception of a redirection instruction from the first mobile radio communication core network to a second mobile radio communication core network, the communication terminal tries to connect to the second mobile radio communication core network.

In 603, upon unsuccessful connection to the second mobile radio communication core network, the communication terminal sends a second connection request to the first mobile radio communication core network indicating that the communication terminal has already been redirected to the second mobile radio communication core network

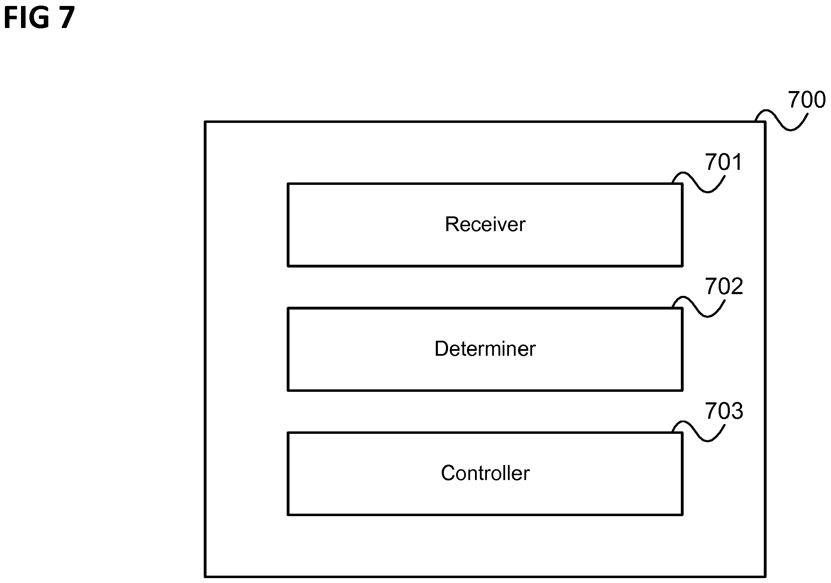

The communication terminal may for example send the connection requests to a network component as illustrated in figure 7.

Figure 7 shows a network component 700.

The network component 700 belongs to a first mobile radio communication core network.

The network component 700 comprises a receiver 701 configured to receive a connection request from a communication terminal.

Further, the network component 700 comprises a determiner 702 configured to determine whether the connection request indicates that the communication terminal has already been redirected to the second mobile radio communication core network.

The network component 700 further comprises a controller 703 preventing redirection of the communication terminal from the first mobile radio communication core network to the second mobile radio communication core network if the connection request indicates that the communication terminal has already been redirected to the second mobile radio communication core network.

The network component 700 may for example be an AMF (for a 5GC) or an MME (for an EPC).

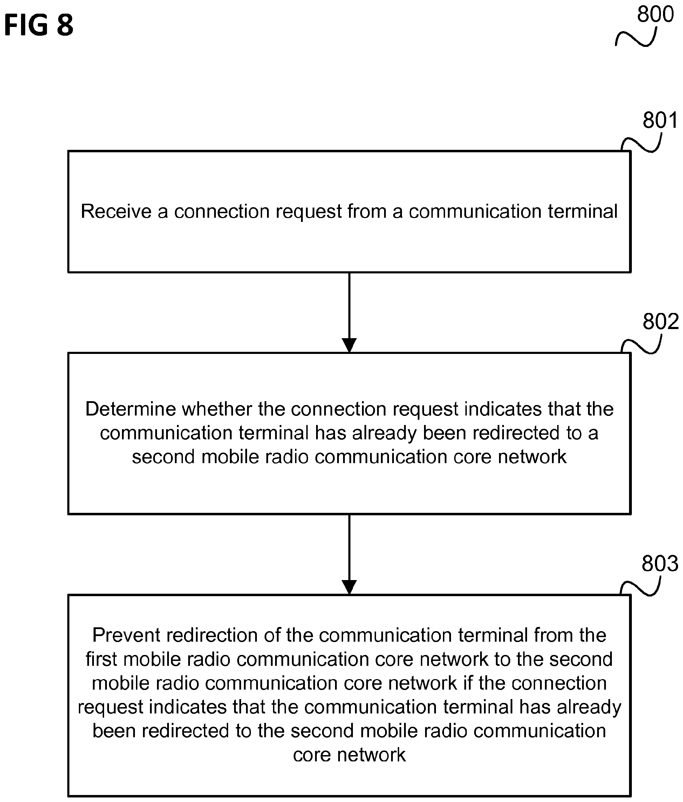

Figure 8 shows a method for controlling access to a mobile radio communication core network, for example performed by a mobile radio communication core network.

In 801, the mobile radio communication core network receives a connection request from a communication terminal.

In 802, the mobile radio communication core network determines whether the connection request indicates that the communication terminal has already been redirected to the second mobile radio communication core network.

In 803, the mobile radio communication core network prevents redirection of the communication terminal from the first mobile radio communication core network to the second mobile radio communication core network if the connection request indicates that the communication terminal has already been redirected to the second mobile radio communication core network.

Various examples are described below:
Example 1 is a communication terminal as illustrated in figure 5.
Example 2 is the communication terminal of Example 1, wherein trying to connect to the second mobile radio communication core network comprises searching for radio access allowing connecting to a second mobile radio communication core network and wherein the communication subsystem is configured to send the second connection request upon an unsuccessful search for radio access allowing connecting to a second mobile radio communication core network.
Example 3 is the communication terminal of Example 1 or 2, wherein the search for radio access is a search for a radio cell allowing the communication terminal access to the second mobile radio communication core network.
Example 4 is the communication terminal of any one of Examples 1 to 3, wherein the first mobile radio communication core network is a 5G core network and the second mobile radio communication core network is a 4G core network.
Example 5 is the communication terminal of Example 4, wherein the connection request is a registration request to an access and mobility management function.
Example 6 is the communication terminal of any one of Examples 1 to 3, wherein the first mobile radio communication core network is a 4G core network and the second mobile radio communication core network is a 5G core network.
Example 7 is the communication terminal of Example 6, wherein the connection request is an attach request or tracking area update request to a Mobility Management Entity.
Example 8 is the communication terminal of any one of Examples 1 to 7, wherein the second connection request includes a indication indicating that the communication terminal has already been redirected to the second mobile radio communication core network.
Example 9 is the communication terminal of Example 8, comprising a memory storing the status of the indication and wherein the communication subsystem is configured to include the indication with the stored status in connection requests sent to the first mobile radio communication core network.
Example 10 is the communication terminal of Example 8 or 9, comprising a controller configured to set the indication to indicate that the communication terminal has already been redirected to the second mobile radio communication core network upon reception of the redirection instruction from the first mobile radio communication core network.
Example 11 is the communication terminal of any one of Examples 1 to 10, comprising a timer, wherein the controller is configured to start the timer upon setting the indication to indicate that the communication terminal has already been redirected to the second mobile radio communication core network and to set the indication to no longer indicate that the communication terminal has already been redirected to the second mobile radio communication core network upon expiry of the timer.
Example 12 is a method for connecting to a mobile radio communication core network as illustrated in figure 6.
Example 13 is the method of Example 12, wherein trying to connect to the second mobile radio communication core network comprises searching for radio access allowing connecting to a second mobile radio communication core network and comprising sending the second connection request upon an unsuccessful search for radio access allowing connecting to a second mobile radio communication core network.
Example 14 is the method of Example 12 or 13, wherein the search for radio access is a search for a radio cell allowing the communication terminal access to the second mobile radio communication core network.
Example 15 is the method of any one of Examples 12 to 14, wherein the first mobile radio communication core network is a 5G core network and the second mobile radio communication core network is a 4G core network.
Example 16 is the method of Example 15, wherein the connection request is a registration request to an access and mobility management function.
Example 17 is the method of any one of Examples 12 to 14, wherein the first mobile radio communication core network is a 4G core network and the second mobile radio communication core network is a 5G core network.
Example 18 is the method of Example 17, wherein the connection request is an attach request or tracking area update request to a Mobility Management Entity.
Example 19 is the method of any one of Examples 12 to 18, wherein the second connection request includes an indication indicating that the communication terminal has already been redirected to the second mobile radio communication core network.
Example 20 is the method of Example 19, comprising storing the status of the indication and including the indication with the stored status in connection requests sent to the first mobile radio communication core network.
Example 21 is the method of Example 19 or 20, comprising setting the indication to indicate that the communication terminal has already been redirected to the second mobile radio communication core network upon reception of the redirection instruction from the first mobile radio communication core network.
Example 22 is the method of any one of Examples 12 to 21, comprising starting a timer upon setting the indication to indicate that the communication terminal has already been redirected to the second mobile radio communication core network and setting the indication to no longer indicate that the communication terminal has already been redirected to the second mobile radio communication core network upon expiry of the timer.
Example 23 is a network component as illustrated in figure 7.
Example 24 is the network component of Example 23, wherein the first mobile radio communication core network is a 5G core network and the second mobile radio communication core network is a 4G core network.
Example 25 is the network component of Example 24, being an access and mobility management function.
Example 26 is the network component of Example 23, wherein the first mobile radio communication core network is a 4G core network and the second mobile radio communication core network is a 5G core network.
Example 27 is the network component of Example 26, being a Mobility Management Entity.
Example 28 is a method for controlling access to a mobile radio communication core network as illustrated in figure 8.
Example 29 is the method of Example 28, wherein the first mobile radio communication core network is a 5G core network and the second mobile radio communication core network is a 4G core network.
Example 30 is the method of Example 29, being performed by an access and mobility management function.
Example 31 is the method of Example 28, wherein the first mobile radio communication core network is a 4G core network and the second mobile radio communication core network is a 5G core network.
Example 32 is the method of Example 31, being performed by a Mobility Management Entity.

According to a further example, a communication terminal is provided comprising a determiner configured to determine whether the communication terminal, upon redirection from a first (mobile radio communication) core network to a second core network, has been unsuccessful in connecting to the second core network, a message generation circuit configured to generate, in case it has been unsuccessful, a connection request message comprising an indication indicating that the communication terminal has been unsuccessful in connecting to the second core network and a transmitter configured to transmit the connection request to the first core network.

According to a further example, a method to control connections to a core network is provided comprising transmitting from a source core network to a user device an instruction to connect to a target core network, the user device disabling the capability to connect to the source core network, the user device, if failing to connect to said target core network, re-enabling the capability to connect to the source core network and the user device, requesting a connection to the source core network, including, in the request, an indication that the user device is connecting after a redirection from the source core network.

It should be noted that one or more of the features of any of the examples above may be combined with any one of the other examples.

The components of the communication terminal and the network component (e.g. the communication subsystem, the receiver, the determiner and the controller) may for example be implemented by one or more circuits. A "circuit" may be understood as any kind of a logic implementing entity, which may be special purpose circuitry or a processor executing software stored in a memory, firmware, or any combination thereof. Thus a "circuit" may be a hardwired logic circuit or a programmable logic circuit such as a programmable processor, e.g. a microprocessor. A "circuit" may also be a processor executing software, e.g. any kind of computer program. Any other kind of implementation of the respective functions described above may also be understood as a "circuit".

The communication terminal may for example be a mobile terminal such as a portable phone and may comprise typical communication terminal devices such as a transceiver (comprising e.g. a baseband processor, one or more filters, transmit chains, receive chains, amplifiers etc.), an antenna, a subscriber identity module, an application processor, a memory, a display, a battery, a speaker, a microphone etc.

While specific aspects have been described, it should be understood by those skilled in the art that various changes in form and detail may be made therein without departing from the spirit and scope of the aspects of this disclosure as defined by the appended claims. The scope is thus indicated by the appended claims and all changes which come within the meaning and range of equivalency of the claims are therefore intended to be embraced.

## Claims

1. A communication terminal comprising:
a communication subsystem configured to
send a first connection request to a first mobile radio communication core network;
upon reception of a redirection instruction from the first mobile radio communication core network to a second mobile radio communication core network, try to connect to the second mobile radio communication core network;
upon unsuccessful connection to the second mobile radio communication core network, send a second connection request to the first mobile radio communication core network indicating that the communication terminal has already been redirected to the second mobile radio communication core network.

2. The communication terminal of claim 1, wherein trying to connect to the second mobile radio communication core network comprises searching for radio access allowing connecting to a second mobile radio communication core network and wherein the communication subsystem is configured to send the second connection request upon an unsuccessful search for radio access allowing connecting to a second mobile radio communication core network.

3. The communication terminal of claim 1 or 2, wherein the search for radio access is a search for a radio cell allowing the communication terminal access to the second mobile radio communication core network.

4. The communication terminal of any one of claims 1 to 3, wherein the first mobile radio communication core network is a 5G core network and the second mobile radio communication core network is a 4G core network.

5. The communication terminal of claim 4, wherein the connection request is a registration request to an access and mobility management function.

6. The communication terminal of any one of claims 1 to 3, wherein the first mobile radio communication core network is a 4G core network and the second mobile radio communication core network is a 5G core network.

7. The communication terminal of claim 6, wherein the connection request is an attach request or tracking area update request to a Mobility Management Entity.

8. The communication terminal of any one of claims 1 to 7, wherein the second connection request includes an indication indicating that the communication terminal has already been redirected to the second mobile radio communication core network.

9. The communication terminal of claim 8, comprising a memory storing the status of the indication and wherein the communication subsystem is configured to include the indication with the stored status in connection requests sent to the first mobile radio communication core network.

10. The communication terminal of claim 8 or 9, comprising a controller configured to set the indication to indicate that the communication terminal has already been redirected to the second mobile radio communication core network upon reception of the redirection instruction from the first mobile radio communication core network.

11. The communication terminal of any one of claims 1 to 10, comprising a timer, wherein the controller is configured to start the timer upon setting the indication to indicate that the communication terminal has already been redirected to the second mobile radio communication core network and to set the indication to no longer indicate that the communication terminal has already been redirected to the second mobile radio communication core network upon expiry of the timer.

12. A method for connecting to a mobile radio communication core network comprising:
sending a first connection request from a communication terminal to a first mobile radio communication core network;
upon reception of a redirection instruction from the first mobile radio communication core network to a second mobile radio communication core network, trying to connect to the second mobile radio communication core network; and
upon unsuccessful connection to the second mobile radio communication core network, sending a second connection request to the first mobile radio communication core network indicating that the communication terminal has already been redirected to the second mobile radio communication core network.

13. A network component of a first mobile radio communication core network comprising:
a receiver configured to receive a connection request from a communication terminal;
a determiner configured to determine whether the connection request indicates that the communication terminal has already been redirected to a second mobile radio communication core network; and
a controller preventing redirection of the communication terminal from the first mobile radio communication core network to the second mobile radio communication core network if the connection request indicates that the communication terminal has already been redirected to the second mobile radio communication core network.

14. A method for controlling access to a mobile radio communication core network comprising:
receiving a connection request from a communication terminal;
determining whether the connection request indicates that the communication terminal has already been redirected to a second mobile radio communication core network; and
preventing redirection of the communication terminal from the first mobile radio communication core network to the second mobile radio communication core network if the connection request indicates that the communication terminal has already been redirected to the second mobile radio communication core network.

## Amended claims

### Amended claims in accordance with Rule 137(2) EPC.

1. A communication terminal comprising:
a communication subsystem configured to
send a first connection request to a first mobile radio communication core network (110);
upon reception of a redirection instruction from the first mobile radio communication core network (110) to a second mobile radio communication core network (106), try to connect to the second mobile radio communication core network (106);
upon unsuccessful connection to the radio access network providing connection to the second mobile radio communication core network (106), send a second connection request to the first mobile radio communication core network (110) indicating that the communication terminal has already been redirected to the second mobile radio communication core network (106).

2. The communication terminal of claim 1, wherein trying to connect to the second mobile radio communication core network (106) comprises searching for radio access allowing connecting to a second mobile radio communication core network (106) and wherein the communication subsystem is configured to send the second connection request upon an unsuccessful search for radio access allowing connecting to a second mobile radio communication core network (106).

3. The communication terminal of claim 1 or 2, wherein the search for radio access is a search for a radio cell allowing the communication terminal access to the second mobile radio communication core network (106).

4. The communication terminal of any one of claims 1 to 3, wherein the first mobile radio communication core network (110) is a 5G core network and the second mobile radio communication core network (106) is a 4G core network.

5. The communication terminal of claim 4, wherein the connection request is a registration request to an access and mobility management function.

6. The communication terminal of any one of claims 1 to 3, wherein the first mobile radio communication core network (106) is a 4G core network and the second mobile radio communication core network is a 5G core network (110).

7. The communication terminal of claim 6, wherein the connection request is an attach request or tracking area update request to a Mobility Management Entity.

8. The communication terminal of any one of claims 1 to 7, wherein the second connection request includes an indication indicating that the communication terminal has already been redirected to the second mobile radio communication core network (106).

9. The communication terminal of claim 8, comprising a memory storing the status of the indication and wherein the communication subsystem is configured to include the indication with the stored status in connection requests sent to the first mobile radio communication core network (110) .

10. The communication terminal of claim 8 or 9, comprising a controller configured to set the indication to indicate that the communication terminal has already been redirected to the second mobile radio communication core network (106) upon reception of the redirection instruction from the first mobile radio communication core network (110) .

11. The communication terminal of any one of claims 1 to 10, comprising a timer, wherein the controller is configured to start the timer upon setting the indication to indicate that the communication terminal has already been redirected to the second mobile radio communication core network (106) and to set the indication to no longer indicate that the communication terminal has already been redirected to the second mobile radio communication core network (106) upon expiry of the timer.

12. A method for connecting to a mobile radio communication core network comprising:
sending a first connection request from a communication terminal to a first mobile radio communication core network (110);
upon reception of a redirection instruction from the first mobile radio communication core network (110) to a second mobile radio communication core network (106),
trying to connect to the second mobile radio communication core network (106); and
upon unsuccessful connection to the radio access network providing connection to the second mobile radio communication core network (106), sending a second connection request to the first mobile radio communication core network (110) indicating that the communication terminal has already been redirected to the second mobile radio communication core network (106).

13. A network component of a first mobile radio communication core network (110) comprising:
a receiver configured to receive a connection request from a communication terminal;
a determiner configured to determine whether the connection request indicates that the communication terminal has already been redirected to a second mobile radio communication core network (106; and
a controller preventing redirection of the communication terminal from the first mobile radio communication core network (110) to the second mobile radio communication core network (106) if the connection request indicates that the communication terminal has already been redirected to the second mobile radio communication core network (106).

14. A method for controlling access to a mobile radio communication core network comprising:
receiving a connection request from a communication terminal;
determining whether the connection request indicates that the communication terminal has already been redirected to a second mobile radio communication core network (106); and
preventing redirection of the communication terminal from the first mobile radio communication core network (110) to the second mobile radio communication core network (106) if the connection request indicates that the communication terminal has already been redirected to the second mobile radio communication core network (106).
